**Europäisches Patentamt**

**European Patent Office**

**Office européen des brevets**

(11) Veröffentlichungsnummer: **0 247 168**
**B1**

(12) **EUROPÄISCHE PATENTSCHRIFT**

(19)

(45) Veröffentlichungstag der Patentschrift:
18.10.89

(21) Anmeldenummer: 87900085.9

(22) Anmeldetag: 24.11.86

(86) Internationale Anmeldenummer:
PCT/EP 86/00676

(87) Internationale Veröffentlichungsnummer:
WO 87/03236 (04.06.87 Gazette 87/12)

(51) Int. Cl.⁴: **B 23 Q 7/14**

(54) **HUB-DREHTISCH-VORRICHTUNG.**

(30) Priorität: 30.11.85 DE 3542373

(43) Veröffentlichungstag der Anmeldung:
02.12.87 Patentblatt 87/49

(45) Bekanntmachung des Hinweises auf die Patenterteilung:
18.10.89 Patentblatt 89/42

(84) Benannte Vertragsstaaten:
AT BE CH FR GB IT LI LU NL SE

(56) Entgegenhaltungen:
EP-A- 0 146 096
CH-A- 640 615
US-A- 4 480 738

(73) Patentinhaber: EXPERT Maschinenbau GmbH,
Seehofstrasse 56-58, D-6143 Lorsch (DE)

(72) Erfinder: MÖLLER, Reinfried, Siegfriedstrasse 27-1,
D-6940 Weinheim (DE)

(74) Vertreter: Helber, Friedrich G., Dipl.-Ing., Patentanwälte
Dipl.-Ing. F. G. Helber Dipl.-Ing. J.K. Zenz Giesser
Weg 47, D-6144 Zwingenberg (DE)

## Beschreibung

Die Erfindung betrifft eine kombinierte Hub-Drehtisch-Vorrichtung mit einem Drehtisch mit einer durch einen Schrittantrieb nach einem vorgegebenen Bewegungsgesetz drehantreibbaren Tischplatte, auf welcher wenigstens ein in senkrechter Richtung auf und ab beweglich geführter ein- oder mehrteiliger Hubschlitten gehaltert ist, von welchem jeweils wenigstens ein Teilabschnitt drehfest mit der Tischplatte gekoppelt ist, wobei der Hubschlitten eine senkrecht angeordnete, mittig von der Drehtisch-Tischplatte nach oben vorstehende, drehantreibbare Zylinderwalze mit wenigstens einer in deren Umfangsfläche eingearbeiteten nutförmigen Steuerkurve umgibt, in welche je ein mit dem Hubschlitten gekoppelter Mitnehmerbolzen eingreift, der bei einer Drehung der Zylinderwalze relativ zum Schlitten eine senkrechte Verschiebung erfährt und auf den Hubschlitten überträgt.

Es ist eine solche Hub-Drehtisch-Vorrichtung bekannt (DE-A-33 44 805), welche zur taktweisen Übernahme von Werkstücken in einer Aufnahmeposition, stoss- und ruckfreien Überführung in eine oder mehrere Bearbeitungsposition(en) und schliesslich zum Weitertransport in eine Abgabeposition, an welcher die Werkstücke wieder übernommen und weitertransportiert werden, dient. Dabei liegen die einzelnen Positionen in unterschiedlichen Höhen, welche durch die auf dem Drehtisch aufgebaute Hubvorrichtung anfahrbar sind.

Der Erfindung liegt demgegenüber die Aufgabe zugrunde, eine Hub-Drehtisch-Vorrichtung zu schaffen, bei welcher die zu übernehmenden, zu bearbeitenden und schliesslich weiterzutransportierenden Werkstücke in den einzelnen Taktpositionen in eine zwar gleiche Höhe aufweisende, jedoch radial ausserhalb der Drehtisch-Tischplatte liegende Position verbracht werden müssen.

Ausgehend von einer Vorrichtung der eingangs erwähnten Art wird diese Aufgabe erfindungsgemäss dadurch gelöst, dass mit Abstand von und parallel zur Zylinderwalze wenigstens eine Gewindespindel mit nicht selbsthemmender Gewindesteigung auf dem Drehtisch drehbar gelagert ist, welche mit jeweils einer komplementären Gewindebohrung im Hubschlitten in Gewindeeingriff steht und an ihrem unteren tischplattenseitigen Ende jeweils über ein Winkelgetriebe mit einer in radialer Erstreckung parallel zur Tischplatten-Oberfläche drehbar gelagerten Gewindespindel gekoppelt ist, welche in Gewindeeingriff mit je einem Mitnehmer für einen in Radialrichtung auf der Tischplatte verfahrbar gelagerten Werkstückaufnahmeschlitten steht, wobei die Übersetzung zwischen dem Hub des Hubschlittens und dem Verschiebungsweg des jeweils zugeordneten Werkstückaufnahmeschlittens so gewählt ist, dass der Werkstückaufnahmeschlitten durch Anfahren des maximalen senkrechten Hubes des Hubschlittens in einen ausserhalb der radialen Begrenzung der Drehtisch-Tischplatte unmittelbar an diese anschliessende Übernahme-, Arbeits- und/oder Übergabestation verfahrbar ist. Der senkrechte Hub des Hubschlittens wird also — abweichend von der bekannten Vorrichtung — durch die über ein Winkelgetriebe miteinander gekoppelten Gewindespindeln in einen horizontalen und radial zum Drehtisch verlaufenden Hub umgesetzt, der auf einen angekoppelten Werkstückaufnahmeschlitten übertragen wird.

Bei einem ersten Ausführungsbeispiel der Erfindung ist die den Hubschlitten antreibende Zylinderwalze sowie ihr Antrieb mittig auf einem innerhalb eines Ausschnitts der drehantreibbaren Tischplatte zugänglichen undrehbaren Teil des Gehäuses für den Schrittantrieb des Drehtischs gelagert, und der Hubschlitten in zwei in Drehrichtung des Drehtischs relativ zueinander verdrehbare, in Hubrichtung des Hubschlittens jedoch miteinander gekoppelte Hubschlittenringe unterteilt, wobei die die Winkelgetriebe antreibenden Gewindespindeln mit jeweils einer Gewindebohrung im radial äusseren Hubschlittenring in Eingriff stehen, während der bzw. die in die Steuerkurve(n) der Zylinderwalze eingreifende(n) Mitnehmerbolzen am inneren Hubschlittenring angeordnet ist bzw. sind.

Bei einem alternativen zweiten Ausführungsbeispiel kann die den Hubschlitten antreibende Zylinderwalze auch auf dem Drehtisch und mit diesem drehbar gelagert sein, wobei ihr ein Antriebsmotor zugeordnet ist, mit welchem sie relativ zum Drehtisch drehantreibbar ist. Jede senkrechte Antriebs-Gewindespindel durchsetzt dann eine Gewindebohrung in einem Bauelement des Hubschlittens, an welchem auch wenigstens ein in die jeweilige Steuernut der Zylinderwalze eingreifender Mitnehmerbolzen angeordnet ist. Eine Unterteilung des Hubtischs in zwei relativ zueinander verdrehbare Hubtisch-Ringe ist dann also nicht erforderlich.

Die Werkstückaufnahmeschlitten bzw. die von diesen gehalterten Werkstückaufnahmen oder Werkzeuge können in vorteilhafter Weiterbildung der Erfindung zumindest in den ausserhalb der radialen Begrenzung der Drehtisch-Tischplatte liegenden Stationen von dem jeweils zugeordneten, mit der horizontal und radial verlaufenden Gewindespindel in Gewindeeingriff stehenden Mitnehmer bzw. vom Werkstückaufnahmeschlitten abkoppelbar ausgebildet sein. Somit ist es beispielsweise möglich, die Werkstückaufnahmeschlitten bzw. auf diesen gehalterte Werkstückaufnahmen oder Werkzeuge abzukoppeln und durch entsprechend andere zu ersetzen, wenn sich dies infolge sich ändernder zu bearbeitender Werkstücke als erforderlich erweist.

Dabei kann es dann zweckmässig sein, wenn dem Drehtisch der Vorrichtung benachbart ein weiterer Drehtisch mit einer durch einen Schrittantrieb drehantreibbaren, in Höhenrichtung mit der Tischplatte des ersten Drehtischs fluchtenden Tischplatte angeordnet ist, wobei der Schrittantrieb des weiteren Drehtischs so ausgebildet ist, dass seine Tischplatte bei einer vollen Umdrehung eine gegenüber dem ersten Drehtisch um 1 erhöhte Schrittzahl ausführt, und der Schrittantrieb des weiteren Drehtischs wahlweise mit dem Schrittantrieb des Drehtischs der Hub-Drehtisch-Vorrichtung koppelbar ist. Auf dem weiteren Drehtisch können dann die erforderlichen abweichenden Werkstückaufnahmeschlitten bzw. Werkstückaufnahmen oder Werkzeuge auf Vorrat gehalten und – im Bedarfsfall – schrittweise gegen die bisher auf dem Drehtisch der Vorrichtung befindlichen Werkstückaufnahmeschlitten bzw. Werkstückaufnahmen oder Werkzeuge ausgetauscht werden, die dann ihrerseits bis zur erneuten Verwendung auf dem weiteren Drehtisch gespeichert werden.

Die Erfindung ist in der folgenden Beschreibung in Verbindung mit der Zeichnung näher erläutert, und zwar zeigt:

Fig. 1 eine perspektivische Ansicht eines ersten Ausführungsbeispiels einer erfindungsgemässen Hub-Drehtisch-Vorrichtung, deren Drehtisch-Tischplatte teilweise weggeschnitten ist, und

Fig. 2 ein in der Darstellungsweise der Vorrichtung gemäss Fig. 1 entsprechendes zweites Ausführungsbeispiel einer erfindungsgemässen Hub-Drehtisch-Vorrichtung.

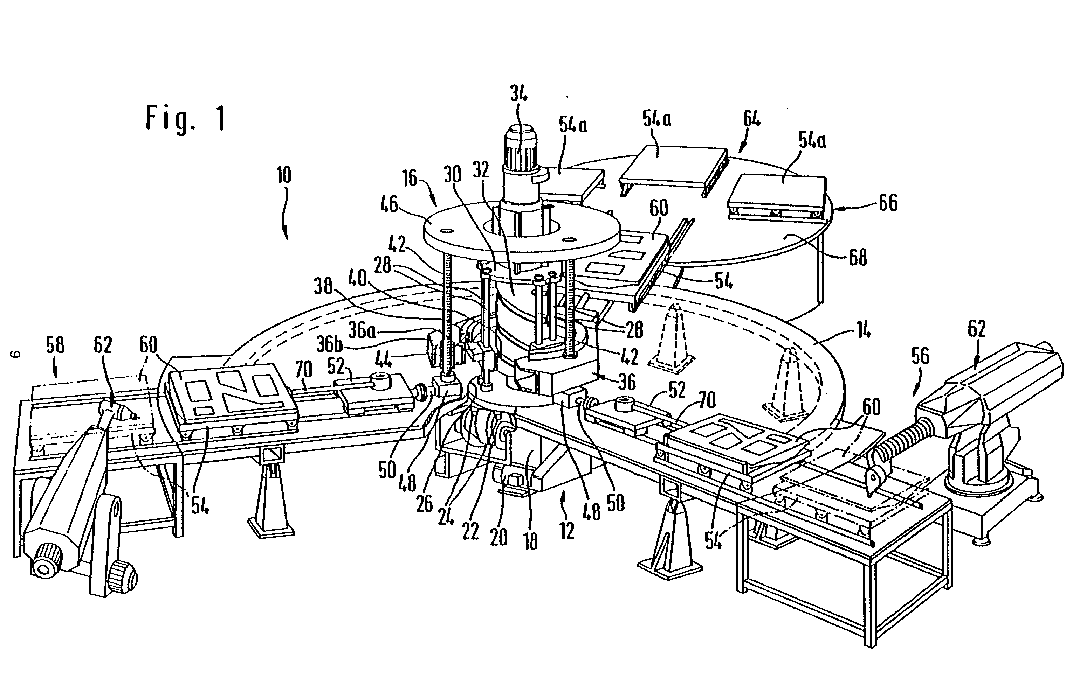

In Figur 1 ist eine in ihrer Gesamtheit mit 10 bezeichnete erfindungsgemässe Hub-Drehtisch-Vorrichtung gezeigt, die sich aus einem durch einen Schrittantrieb taktweise um vorgegebene Winkelbeträge drehantreibbaren Drehtisch 12 und einer auf dessen Tischplatte 14 aufgesetzten Hub-vorrichtung 16 zusammensetzt. Die Tischplatte 14 ist auf dem ruhenden Drehtisch-Gehäuse 18 drehbar gelagert, wobei der Drehantrieb durch eine von einem Elektromotor 20 über ein (nicht gezeigtes) Zwischengetriebe in Umdrehung versetzbare, mit horizontaler Drehachse unter der Tischplatte im Gehäuse 18 gelagerte Antriebswalze 22 erfolgt, in deren Umfangsfläche eine Antriebsnut eingefräst ist, welche mit auf der Unterseite der Tischplatte auf einem entsprechenden Teilkreis in gleichmässiger Teilung angeordneten Transportbolzen 24 zusammenwirkt. Drehtische mit derartigen Schrittantrieben sind bekannt, so dass auf eine ins Einzelne gehende Schilderung verzichtet werden kann.

Die Hubvorrichtung 16 weist ein Hubgestell in Form von drei in gleichen Winkelabständen auf einem innerhalb eines Ausschnitts 26 in der Tischplatte 14 freiliegenden undrehbaren Teil des Drehtisch-Gehäuses 18 befestigten Paaren von parallelen senkrechten Führungssäulen 28 auf, deren obere Enden an bzw. in einer horizontalen Querplatte 30 gehalten sind. Mittig innerhalb der Führungssäulen-Paare 28 ist eine Zylinderwalze 32 um ihre mit der Drehachse der Drehtisch-Tisch-platte 14 zusammenfallende senkrechte Drehach-se drehbar gelagert, wofür an ihrem oberen Ende ein auf der Querplatte gehalterter Getriebemotor 34 vorgesehen ist.

Auf den Führungssäulen 28 ist ein die Zylinderwalze 32 konzentrisch umgebender Hubschlitten 36 in senkrechter Richtung auf und ab verschiebbar gelagert, der sich seinerseits aus zwei konzen-trischen Hubschlittenringen 36a, 36b zusammen-setzt, welche über ein entsprechendes Lager 38 relativ zueinander verdrehbar, in senkrechter Hubrichtung des Hubschlittens 36 jedoch miteinander verbunden sind.

Vom inneren Hubschlittenring 36a treten radial Mitnehmerbolzen 40 zur Zylinderwalze 32 vor, deren freie Enden in je eine in die Umfangsfläche der Zylinderwalze eingearbeitete nutförmige Steuerkurve eingreifen, wobei zweckmässig mehrere, z. B. drei in gleichmässigen Winkelabständen versetzt vorgesehene Mitnehmerbolzen 40 in je eine zugeordnete Steuerkurve eingreifen. Die Zylinderwalze 32 weist dann also drei solcher jeweils um 120° versetzt in die Umfangsfläche eingearbeitete Steuerkurven gleichen Kurvenverlaufs auf.

Der äussere Hubschlittenring 36b wird von – im dargestellten Fall drei – in gleichmässigen Winkel-abständen versetzten senkrechten Gewindespin-deln 42 durchsetzt, welche mit fest mit dem Hubschlittenring 36b verbundenen Gewindebüchsen 44 in Gewindeeingriff stehen. Die Steigung der komplementären Gewinde der Gewindespindeln 42 und der Gewindebüchsen 44 ist dabei so gewählt, dass keine Selbsthemmung auftritt. An ihrem oberen Ende sind die Gewindespindeln 42 in einer gemeinsamen Querplatte 46 drehbar gelagert, während ihre unteren Enden jeweils in das Gehäuse eines auf der Tischplatte 14 befestigten Winkelgetriebes 48 geführt sind.

Aus dem Gehäuse des Winkelgetriebes 48 ist dann jeweils eine parallel zur Tischplatte 14 radial nach aussen weisende zweite, horizontale Gewindespindel 50 herausgeführt, welche in Gewindeeingriff mit je einem Mitnehmer 52 für einen in Radialrichtung auf der Tischplatte 14 verfahrbar gelagerten Werkstückaufnahmeschlitten 54 steht. Es ist ersichtlich, dass bei einem Drehantrieb der Zylinderwalze 32 durch den Getriebemotor 34 über die in die nutförmigen Steuerkurven eingreifenden Mitnehmerbolzen 40 eine Hubbewegung auf den Hubschlitten 36 übertragen wird. Durch den zwischen den Gewindespindeln 42 und den Gewindebüchsen 44 im äusseren Hubschlittenring 36b bestehenden Gewindeeingriff werden die Gewindespindeln 42 dabei in Umdrehung versetzt, wobei diese Drehung über die Winkelgetriebe 48 auf die horizontalen Gewindespindeln 50 übertragen wird, die dementsprechend die Mitnehmer 52 und somit die diesem zugeordneten Werkstückaufnahmeschlitten 54 in Radialrichtung verschieben. Die Übersetzung zwischen dem Hub des Hubschlittens 36 und dem Verschiebungsweg des jeweils zugeordneten Werkstückaufnahmeschlittens 54 ist dabei so gewählt, dass der Werk-stückaufnahmeschlitten durch Anfahren des ma-ximalen senkrechten Hubes des Hubschlittens 36 in eine ausserhalb der radialen Begrenzung der Drehtisch-Tischplatte unmittelbar an diese anschliessende ortsfeste Station verfahrbar ist. In der Zeichnung sind zwei Arbeitsstationen 56 und 58 dargestellt, die von ortsfesten Gestellen gebildet sein mögen, auf deren oberer, zur Tischplatte 14 fluchtender Arbeitsfläche die über die Werkstückaufnahmeschlitten 54 zugeführten Werkstücke 60 für die Bearbeitung – beispielsweise mittels der nur schematisch angedeuteten Schweissroboter 62 – zugänglich sind. Um die Werkstücke 60 während der Bearbeitung in den Bearbeitungsstationen exakt ausgerichtet zu halten, müssen die Werkstückaufnahmeschlitten 54 mit den Werkstücken 60 angepassten Halterungen oder Werkstückaufnahmen versehen sein. Bei Änderung der Form der zu bearbeitenden Werkstücke müssen dementsprechend auch die Werkstückaufnahmen entsprechend geändert werden. In der Zeichnung ist für diesen Zweck noch eine dritte Station 64 dargestellt, in welcher Werkstückaufnahmeschlitten 54a für abweichende Werkstücke auf Vorrat gehalten und schrittweise gegen die auf der Tischplatte 14 vorgesehenen Werkstückaufnahmeschlitten 54 ausgetauscht werden können. Die Station 64 wird von einem weiteren, schrittweise drehantreibbaren Drehtisch 66 gebildet, auf dessen unmittelbar an die Tischplatte 14 des Drehtischs 12 anschliessender und höhenmässig mit dieser fluchtenden Tischplatte 68 die radialen Laufschienen für die Werkstückaufnahmeschlitten 54a bzw. 54 vorgesehen sind. Dabei ist wesentlich, dass der Drehtisch 66 eine gegenüber der Schrittzahl des Drehtischs 12 um 1 erhöhte Schrittzahl ausführt. Im dargestellten Ausführungsbeispiel weist der Drehtisch 12 eine 3-Teilung auf, d. h. er ist mit drei Werkstückaufnahmeschlitten versehen und bei jedem Schaltschritt wird die Tischplatte 14 um 120° verdreht. Demgegenüber weist der Drehtisch 66 eine 4-Teilung auf, d. h. seine Tischplatte vermag insgesamt vier Werkzeugaufnahmeschlitten in um jeweils 90° zueinander versetzten Positionen aufzunehmen und die Tischplatte 68 führt bei jedem Schaltschritt eine Drehbewegung von – dementsprechend – 90° aus. Die Tischplatte 68 bietet also Aufnahmemöglichkeit für einen Werkstückaufnahmeschlitten mehr als die Tischplatte 14 bzw. eine Aufnahme kann für den Beginn des Tauschvorgangs freibleiben.

Damit ein solcher Austausch aber überhaupt möglich ist, müssen die Werkstückaufnahmeschlitten 54 (bzw. 54a) von den Mitnehmern 52 abkoppelbar sein. Für diese Abkopplung mögen also die in der Zeichnung schematisch dargestellten, die Mitnehmer 52 mit den Werkstückaufnahmeschlitten 54 verbindenden Koppelstangen 70 durch (nicht gezeigte) lösbare Kupplungen an den Werkstückaufnahmeschlitten 54 angeschlossen sein, wobei dies selbstschliessende Kupplungen sein können, für deren Öffnung beim Übergeben eines Werkstückaufnahmeschlittens 54 auf die Tischplatte 68 auch geeignete automatische Entkupplungsvorrichtungen vorgesehen sein können.

Für die in Figur 1 dargestellte und vorstehend beschriebene Hub-Drehtisch-Vorrichtung 10 ist aus Gründen der übersichtlichen Darstellung und einfachen Beschreibung eine Vorrichtung mit 3-Teilung gewählt, welche drei Werkstückaufnahmeschlitten 54 aufweist, die schrittweise um jeweils 120° gedreht und dann in jeder Stillstandsposition radial über die äussere Begrenzung des Drehtischs 14 hinaus in die Bearbeitungs- oder auch Aufnahme- oder Übergabestationen verfahrbar sind. Dabei ist aber darauf hinzuweisen, dass die Anzahl der mit dem Drehtisch anfahrbaren Station bei Wahl einer grösseren Schrittzahl und Anordnung einer entsprechend erhöhten Anzahl von Werkstückaufnahmeschlitten 54 auf der Tischplatte 14 bei gleichzeitig entsprechend verringertem Schrittwinkel erhöht werden kann. Wenn beispielsweise Werkstücke in einer Station von einem Förderer übernommen, in drei anschliessenden Stationen in unterschiedlichen Arbeitsgängen bearbeitet und dann in einer weiteren Übergabestation an einen zweiten Förderer ausgegeben werden sollen, müssen mit dem Drehtisch 12 also insgesamt fünf um jeweils 72° versetzte Stationen anfahrbar sein. Der Drehtisch ist dann also durch ein Schrittgetriebe mit 5-Teilung anzutreiben.

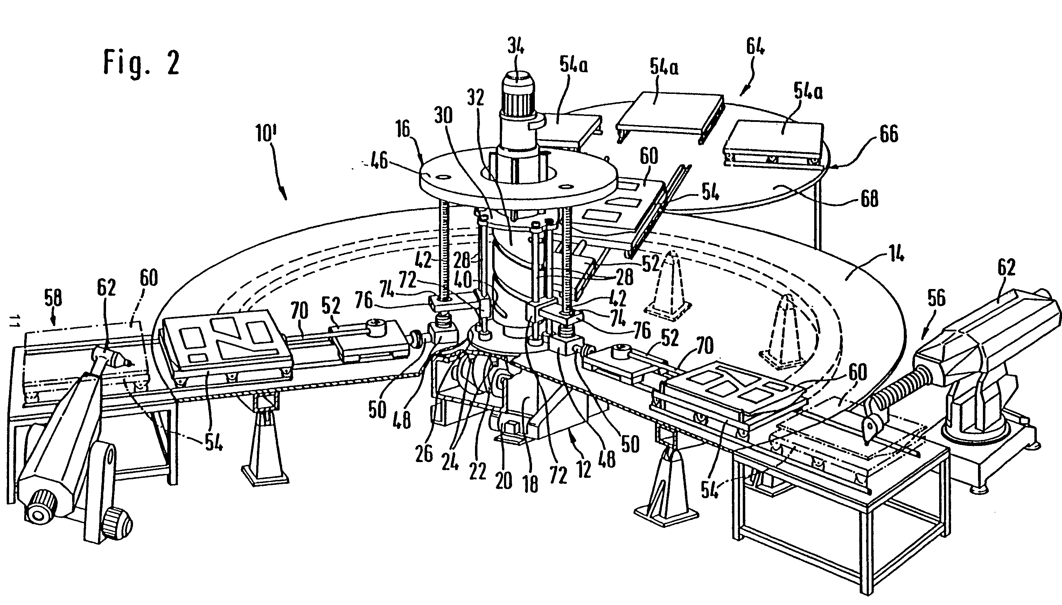

Das in Figur 2 dargestellte Ausführungsbeispiel einer erfindungsgemässen Hub-Drehtisch-Vorrichtung 10' entspricht der vorstehend in Verbindung mit Fig. 1 beschriebenen Vorrichtung 10 weitgehend, weshalb nachfolgend auch nur die getroffenen Unterschiede kurz dargelegt werden, während es im übrigen zur Vermeidung unnötiger Wiederholungen genügen mag, auf die vorausgehende Beschreibung zu verweisen, zumal baulich und funktionell übereinstimmenden Teilen der Vorrichtungen 10 und 10' in den Zeichnungsfiguren jeweils gleiche Bezugszeichen zugeordnet sind.

Im Unterschied zur Vorrichtung 10 ist die Hubvorrichtung 16 der Hub-Drehtisch-Vorrichtung 10' insgesamt auf der Tischplatte 14 des Drehtischs 12 gelagert und wird bei der schrittweisen Drehung der Tischplatte 14 mit dieser verdreht. Dadurch kann die Unterteilung des Hubschlittens 36 der Vorrichtung 10 in zwei konzentrische relativ zueinander verdrehbare, in Hubrichtung jedoch gekoppelte Hubschlittenringe entfallen. Vielmehr wird der Hubschlitten durch eine der Anzahl der Führungssäulen-Paare 28 entsprechende Anzahl von prismatischen, mit Führungsbohrungen für die Führungssäulen versehenen Führungsstücken 72 ersetzt, von deren der Zylinderwalze 32 zugewandter Fläche je ein Mitnehmerbolzen 40 radial in die zugehörige nutartige Steuerkurve der Zylinderwalze 32 eingreift, während die senkrechten Gewindespindeln mit komplementären Gewindebohrungen 74 in von den Führungsstücken 72 radial nach aussen vortretenden Kragansätzen 76 in Gewindeeingriff stehen. Die prismatischen Führungsstücke 72 könnten auch zu einem die Zylinderwalze 32 konzentrisch umgebenden, dem Hubschlittenring 36a im wesentlichen entsprechenden einstückigen Ring zusammengefasst sein. Die gewählte Form von einzelnen Führungsstücken spart demgegenüber aber Material. Anderseits kann ein solcher einstückiger Ring aber dann erforderlich werden, wenn der Drehtisch 12 mit höherer Teilungszahl für eine grössere Anzahl von Werkstückaufnahmeschlitten 54 hergestellt werden soll, da sich dann die Zahl der Führungssäulen-Paare 28 ebenso wie die der Führungsstücke erhöhen würde und dementsprechend auch die Zahl der nutartigen Steuerkurven in der Zylinderwalze 32 erhöhen würden. In einem solchen Fall ist die Verwendung eines einstückigen Hubschlittenrings anstelle einzelner Führungsstücke 72 zu bevorzugen, da dann — auch bei grösserer Teilungszahl — drei Führungssäulen-Paare 28 für die Führung des Hubrings sowie drei vom Ring vorspringende Mitnehmerbolzen 40 und dementsprechend auch drei Steuerkurven in der Zylinderwalze 32 genügen, um auch eine grössere Anzahl von senkrechten Gewindespindeln 42 anzutreiben.

Da sich bei diesem Ausführungsbeispiel die gesamte Hubvorrichtung 16 mit der Tischplatte 14 des Drehtischs 12 dreht, muss die elektrische Antriebsenergie dem Motor 34 für die Zylinderwalze 32 über zwischen die elektrischen Zuleitungen und den Motor eingeschaltete Schleifring-Übertragungseinrichtungen zugeführt werden, wenn der Drehtisch 14 in der bisher beschriebenen Weise aufeinanderfolgend stufenweise in gleicher Drehrichtung bewegt wird. Wenn anderseits die Werkstückaufnahmeschlitten 54, 54a in der ebenfalls beschriebenen Weise in den Arbeitsstationen von den Mitnehmern 52 abkoppelbar sind, ist auch eine nur pendelnde Betriebsweise des Drehtischs 12 vorstellbar, indem der Drehtisch nach Abkoppeln seiner Mitnehmer 52 von den in den Arbeitsstationen stehenden Werkstückaufnahmeschlitten 54 während der Bearbeitung der Werkstücke 60 in den Arbeitsstationen wieder um den Schrittwinkel zurückgedreht und dann — vor dem nächstfolgenden Antriebsschritt — in die ursprüngliche Schrittrichtung wieder mit den Werkstückaufnahmeschlitten gekoppelt wird. Für eine solche pendelnde Betriebsweise der Tischplatte 14 des Drehtischs 12 kann die elektrische Energie dem Motor 34 dann über flexible elektrische Leitungen zugeführt werden, d. h. Schleifring-Übertragungseinrichtungen sind nicht erforderlich.

**Patentansprüche**

1. Kombinierte Hub-Drehtisch-Vorrichtung (10; 10′) mit einem Drehtisch (12) mit einer durch einen Schrittantrieb (20, 22, 24) nach einem vorgegebenen Bewegungsgesetz drehantreibbaren Tischplatte (14), auf welcher wenigstens ein in senkrechter Richtung auf und ab beweglich geführter ein- oder mehrteiliger Hubschlitten (36; 72, 76) gehaltert ist, von welchem jeweils wenigstens ein Teilabschnitt drehfest mit der Tischplatte (14) gekoppelt ist, wobei der Hubschlitten eine senkrecht angeordnete, mittig von der Drehtisch-Tischplatte (14) nach oben vorstehende, drehantreibbare Zylinderwalze (32) mit wenigstens einer in deren Umfangsfläche eingearbeiteten nutförmigen Steuerkurve umgibt, in welche je ein mit dem Hubschlitten gekoppelter Mitnehmerbolzen (40) eingreift, der bei einer Drehung der Zylinderwalze (32) relativ zum Schlitten eine senkrechte Verschiebung erfährt und auf den Hubschlitten überträgt,
dadurch gekennzeichnet,
dass mit Abstand von und parallel zur Zylinderwalze (32) wenigstens eine Gewindespindel (42) mit nicht selbsthemmender Gewindesteigung auf dem Drehtisch (12) drehbar gelagert ist, welche mit jeweils einer komplementären Gewindebohrung (44; 74) im Hubschlitten (36; 72, 76) in Gewindeeingriff steht und an ihrem unteren tischplattenseitigen Ende jeweils über ein Winkelgetriebe (48) mit einer in radialer Erstreckung parallel zur Tischplatten-Oberfläche drehbar gelagerten Gewindespindel (50) gekoppelt ist, welche in Gewindeeingriff mit je einem Mitnehmer (52) für einen in Radialrichtung auf der Tischplatte (14) verfahrbar gelagerten Werkstückaufnahmeschlitten (54) steht, wobei die Übersetzung zwischen dem Hub des Hubschlittens (36; 72, 76) und dem Verschiebungsweg des jeweils zugeordneten Werkstückaufnahmeschlittens (54) so gewählt ist, dass der Werkstückaufnahmeschlitten (54) durch Anfahren des maximalen senkrechten Hubes des Hubschlittens (36; 72, 76) in einen ausserhalb der radialen Begrenzung der Drehtisch-Tischplatte (14) unmittelbar an diese anschliessende ortsfeste Übernahme-, Arbeits- und/oder Übergabestation (36; 58; 64) verfahrbar ist.

2. Hub-Drehtisch-Vorrichtung nach Anspruch 1, dadurch gekennzeichnet, dass die den Hubschlitten (36) antreibende Zylinderwalze (32) sowie ihr Antrieb mittig auf einem innerhalb eines Ausschnitts (26) der drehantreibbaren Tischplatte (14) zugänglichen undrehbaren Teil des Gehäuses (18) für den Schrittantrieb des Drehtischs (12) gelagert ist, und dass der Hubschlitten (36) in zwei in Drehrichtung des Drehtischs (12) relativ zueinander verdrehbare, in Hubrichtung des Hubschlittens (26) jedoch miteinander gekoppelte Hubschlittenringe (36a; 36b) unterteilt ist, wobei die die Winkelgetriebe (48) antreibenden Gewindespindeln (42) mit jeweils einer Gewindebohrung (44) im radial äusseren Hubschlittenring (36b) in Eingriff stehen, während der bzw. die in die Steuerkurve(n) der Zylinderwalze (32) eingreifende(n) Mitnehmerbolzen (40) am inneren Hubschlittenring (36a) angeordnet ist bzw. sind.

3. Hub-Drehtisch-Vorrichtung nach Anspruch 1, dadurch gekennzeichnet, dass die den Hubschlitten (72, 76) antreibende Zylinderwalze (32) auf dem Drehtisch (12) und mit diesem drehbar gelagert ist, wobei ihr ein Antriebsmotor (34) zugeordnet ist, mit welchem sie relativ zum Drehtisch (12) drehantreibbar ist, und dass jede senkrechte Gewindespindel (42) eine Gewindebohrung (74) in einem Bauelement (76) des Hubschlittens durchsetzt, an welchem auch wenigstens ein in die jeweilige Steuerkurve der Zylinderwalze (32) eingreifender Mitnehmerbolzen (40) angeordnet ist.

4. Hub-Drehtisch-Vorrichtung nach einem der Ansprüche 1 bis 3, dadurch gekennzeichnet, dass die Werkstückaufnahmeschlitten (54) bzw. von diesen gehaltete Werkstückaufnahmen oder Werkzeuge zumindest in den ausserhalb der radialen Begrenzung der Drehtisch-Tischplatte (14) liegenden Stationen (56, 58; 64) von dem jeweils zugeordneten, mit der horizontal und radial verlaufenden Gewindespindel (50) in Gewindeeingriff stehenden Mitnehmer (52) bzw. vom Werkstückaufnahmeschlitten (54) abkoppelbar ausgebildet sind.

5. Hub-Drehtisch-Vorrichtung nach Anspruch 4, dadurch gekennzeichnet, dass dem Drehtisch (12) der Vorrichtung (10) benachbart ein weiterer Drehtisch (66) mit einer durch einen Schrittantrieb drehantreibbaren, in Höhenrichtung mit der Tischplatte (14) des ersten Drehtischs (12) fluchtenden Tischplatte (68) angeordnet ist, wobei der Schrittantrieb des weiteren Drehtischs (66) so ausgebildet ist, dass seine Tischplatte (68) bei einer vollen Umdrehung einer gegenüber dem ersten Drehtisch (12) um 1 erhöhte Schrittzahl ausführt, und dass der Schrittantrieb des weiteren Drehtischs (66) wahlweise mit dem Schrittantrieb des Drehtischs (12) der Hub-Drehtisch-Vorrichtung (10) koppelbar ist.

## Claims

1. Lifting rotary table device (10; 10') having a turntable (12) with a table plate (14) which can be made to rotate by a stepping drive (20, 22, 24) according to a given program of movement, and on which table plate there is mounted at least one unitary or multipart, vertically ascending and descending lift carriage (36; 72, 76) of which at least one partial section each is non-rotatably coupled with the table plate (14) while the lift carriage surrounds a vertically disposed rotatable cylinder (32) projecting centrally upward from the turntable plate (14) and having one cam groove each worked into its circumferential surface, each cam groove being engaged by a follower pin (40) coupled with the lift carriage and which upon rotation of the cylinder (32) relative to the carriage performs a vertical displacement and transmits it to the carriage, characterized in that at least one threaded spindle (42), spaced from and parallel to the cylinder (32), with a thread pitch which is not self-locking is rotatably mounted on the turntable (12), and is in threaded engagement each with a complementary threaded bore (44; 74) in the lift carriage (36; 72, 76), and at its bottom, table-plate end is coupled by an angle drive (48) to a threaded spindle (50) which is rotatably mounted radially parallel to the table plate surface, and which is in threaded engagement with a driver (52) for driving a workpiece carriage (54) mounted for travel radially on the table plate (14), the ratio between the movement of the lift carriage (36; 72, 76) and the displacement of the workpiece carriage (54) associated therewith being selected such that the workpiece carriage (54), by running through the maximum vertical movement of the lift carriage (36; 72, 76), can be brought to a pick-up, working and/or offbearing station (36; 58; 64) directly adjoining the turntable plate (14) outside of the radial boundary of the latter.

2. Lifting rotary table device according to claim 1, characterized in that the cylinder (32) driving the lift carriage (36), as well as its drive, are mounted centrally on a non-rotatable part of the housing (18) for the stepping drive of the turntable (12), which is accessible within an opening (26) in the rotatable table plate (14), and the lift carriage (36) is divided into two lift carriage rings (36a; 36b) which are rotatable relative to one another in the direction of rotation of the turntable (12), but coupled to one another in the lifting direction of the lift carriage (36), the threaded spindles (42) driving the angle drives (48) being engaged each with a threaded bore (44) in the radially outer lift carriage ring (36b), while the cam follower pin or pins (40) engaging the cam groove(s) of the cylinder (32) are disposed on the inner lift carriage ring (36a).

3. Lifting rotary table device according to claim 1, characterized in that the cylinder (32) driving the lift carriage (72, 76) is journaled on the turntable (12) and rotatable therewith, a motor (34) being associated with it whereby it can be rotated relative to the turntable (12), and that each vertical threaded spindle (42) passes through a threaded bore (74) in a component (76) of the lift carriage, on which also at least one cam follower pin (40) is disposed which engages its corresponding cam groove of the cylinder (32).

4. Lifting rotary table device according to any one of claims 1 to 3, characterized in that the workpiece mounting carriages (54) or workpiece mounts or tools held by them are made uncouplable from the associated driver (52) in threaded engagement with the horizontally and radially disposed threaded spindles (50) or from the workpiece mounting carriage (54), at least in the stations (56, 58; 64) lying outside of the radial boundary of the turntable table plate (14).

5. Lifting rotary table device according to claim 4, characterized in that an additional turntable (66) is disposed adjacent the turntable (12) of the apparatus (40) and has a table plate (68) which is level with the table plate (14) of the first turntable (12) is rotatable by a stepping drive, the stepping drive of the additional turntable (66) being so configured that its table plate (68) performs a number of steps in a full rotation which is greater by 1 than the first turntable (12) and in that the stepping drive of the additional turntable (66) is selectively couplable with the stepping drive of the turntable (12) of the lifting rotary table device (10).

## Revendications

1. Dispositif combiné à table tournante et élévateur (10; 10') comportant une table tournante (12) ayant un plateau (14) qu'un mécanisme moteur pas-à-pas (20, 22, 24) peut faire tourner suivant une loi de mouvement donnée et sur lequel est monté au moins un chariot élévateur d'une seule pièce ou en plusieurs parties (36; 72, 76) guidé de façon à pouvoir monter et descendre verticalement et dont au moins une partie est accouplée, clavetée en rotation, avec le plateau (14), ce chariot élévateur entourant un cylindre (32) placé verticalement, saillant vers le haut, au milieu du plateau (14), pouvant être mis en rotation et muni d'au moins une came de commande en forme de rainure ménagée dans sa surface latérale, came dans laquelle s'engage un doigt d'entraînement (40) accouplé au chariot élévateur qui, lors d'une rotation du cylindre (32) par rapport à ce chariot, subit un déplacement vertical et le transmet à ce chariot, caractérisé par le fait que, à distance du, et parallèlement au, cylindre (32), est montée tournante sur la table tournante (12) au moins une colonne filetée (42) à pas non autobloquant qui est en prise avec un trou taraudé complémentaire (44; 74) du chariot élévateur (36; 72, 76) et est, à son extrémité inférieure, côté plateau, accouplée par un engrenage d'angle (48) à une tige filetée (50) montée tournante en s'étendant radialement parallèlement à la surface du plateau et qui engrène avec un entraînement (52) destiné à entraîner un chariot porte-pièce (54) monté mobile radialement sur le plateau (14), le rapport entre l'élévation du chariot élévateur (36; 72, 76) et le déplacement du chariot porte-pièce (54) associé étant choisi de façon que le chariot porte-pièce (54) puisse, par atteinte de l'élévation maximale du chariot élévateur (36; 72, 76), être amené à un poste fixe de prise, de travail ou de transfert (56, 58; 64) situé à l'extérieur de la limite radiale du plateau (14) de la table tournante et contigu à celui-ci.

2. Dispositif à table tournante et élévateur selon la revendication 1, caractérisé par le fait que le cylindre (32) entraînant le chariot élévateur (36), ainsi que son mécanisme moteur, sont montés, au centre, sur une partie non tournante, accessible à l'intérieur d'une échancrure (26) du plateau (14), pouvant être mis en rotation, du carter (18) du mécanisme de commande pas-à-pas de la table tournante (12), et que le chariot élévateur (36) est divisé en deux anneaux (36a; 36b) pouvant tourner l'un par rapport à l'autre dans la direction de rotation de la table tournante (12) mais accouplés dans la direction d'élévation du chariot élévateur (36), les colonnes filetées (42) entraînant les engrenages d'angle (48) étant chacune en prise avec un trou taraudé (44) prévu dans l'anneau radialement extérieur (36b) du chariot élévateur, tandis que le ou les doigt(s) d'entraînement (40) engagé(s) dans la ou les came(s) de commande du cylindre (32) est (ou sont) placé(s) sur l'anneau intérieur (36a) du chariot élévateur.

3. Dispositif à table tournante et élévateur selon la revendication 1, caractérisé par le fait que le cylindre (32) entraînant le chariot élévateur (72, 76) est monté sur la table tournante (12) et tournant avec celle-ci et il lui est adjoint un moteur (34) qui permet de le faire tourner par rapport à la table tournante (12), et que chaque colonne filetée verticale (42) traverse un trou taraudé (74) d'un élément (76) du chariot élévateur sur lequel est aussi prévu au moins un doigt d'entraînement (40) qui s'engage dans la came de commande correspondante du cylindre (32).

4. Dispositif à table tournante et élévateur selon l'une des revendications 1 à 3, caractérisé par le fait que les chariots porte-pièce (54), ou des porte-pièce ou outils portés par ceux-ci, sont conçus de manière à pouvoir, au moins aux postes (56, 58; 64) situés à l'extérieur de la limite radiale du plateau (14) de la table tournante, être désaccouplés de l'entraîneur associé (52), en prise avec la tige filetée horizontale radiale (50), ou du chariot porte-pièce (54).

5. Dispositif à table tournante et élévateur selon la revendication 4, caractérisé par le fait qu'à côté de sa table tournante (12) est placée une autre table tournante (66) munie d'un plateau (68) qu'un mécanisme moteur pas-à-pas peut faire tourner et qui affleure en hauteur le plateau (14) de la première table tournante (12), le mécanisme moteur pas-à-pas de l'autre table tournante (66) étant conçu de façon que le plateau (68) de celle-ci, en un tour complet, fasse un pas de plus que la première table tournante (12), et que le mécanisme moteur pas-à-pas de l'autre table tournante (66) puisse être accouplé à volonté au mécanisme moteur pas-à-pas de la table tournante (12) du dispositif à table tournante et élévateur (10).

Fig. 1

Fig. 2

EP 0 247 168 B1